# EUROPEAN PATENT APPLICATION

(11) **EP 2 036 653 A1**
(43) Date of publication of application: **18.03.2009**
(21) Application number: 08163928.8
(22) Date of filing: 09.09.2008
(51) Int. Cl.: B23K 26/10, B23K 26/22, B23K 37/02, B23K 37/04, B23K 26/14, B23K 26/42, B23K 26/02

(54) **Laser welding device with pressing means, in particularly for welding overlapping flaps of metal plates**

(30) Priority: 11.09.2007 IT PD20070290
(71) Applicant: Tecnolaser S.R.L., 35010 Campo San Martino (PD) (IT)
(72) Inventor: De Bardi, Mario, 35010, CAMPO SAN MARTINO PD (IT)
(74) Representative: Modiano, Micaela Nadia

(57) **Abstract**

A laser welding device (10), particularly for welding flaps of overlapping metal plates, comprises a body (12) that supports a welding laser torch (13). The body (12) comprises a presser (14), and means are provided for pressing the presser (14) against one of the flaps for their mutual matching at least at a region to be welded. The laser torch (13) has, at the presser (14), an emitter (16) of a laser beam, in order to project it onto the matching flaps to be welded.

## Description

The present invention relates to a laser welding device, particularly for welding overlapping flaps of metal plates.

Various methods are currently known for welding metallic materials which are based substantially on the melting of the materials to be welded by Joule effect, induced by an electric current that flows through them.

To weld metal plates, one method in use is spot welding.

According to this method, the flaps to be welded are connected to the electrodes of an electric current source and are arranged mutually adjacent, so that the resistance to the flow of current, represented by their separation surfaces, induces by Joule effect a heating thereof that causes the localized melting of the metallic material and the consequent welding of the flaps.

One drawback of this method and in general of currently known methods for welding metal plates, is that it leaves a weld mark on the welded plates, which is particularly unwanted on plates that have aesthetic functions.

Eliminating this mark requires a pick-up of the surface of the welded plate, for example by grinding, that is not always effective, to the full detriment of productivity and low cost.

The application of laser technology to weld overlapping plates, however, has some drawbacks.

If the surfaces of the plate do not match up accurately at the region to be welded, the weld is defective, due to the air gap that is present between the unmatched plates affected by the welding laser beam.

Currently, in order to laser weld overlapping plates it is necessary to provide an expensive apparatus for positioning and accurate match-up of the plates, without which the above cited defectiveness would be encountered.

Further, focusing of the welding laser beam is performed with reference to the resting surface of the plates to be welded, and must therefore be recalibrated whenever plates having different thicknesses or shape characteristics are prepared for welding.

The aim of the present invention is to provide a laser welding device, particularly for welding overlapping flaps of metal plates, that leaves no marks on the welded plates and does not have welding defects if the plates to be welded do not accurately match up spontaneously.

Within this aim, an object of the invention is to provide a laser welding device that allows to provide welds whose structural strength is at least equal to that of currently known welds.

Another object of the invention is to provide a welding device that ensures constant positioning of the torch with respect to the surface of the plate to be welded, so as to require no adjustments of the focus of the laser torch except to obtain different welding characteristics.

Another object of the invention is to provide a device that is structurally simple and easy to use and can be manufactured with relatively low costs.

This aim and these and other objects, which will become better apparent hereinafter, are achieved by a laser welding device, particularly for welding overlapping flaps of metal plates, which comprises a body that supports a welding laser torch, characterized in that said body comprises a presser, means for pressing said presser against one flap of said flaps being provided for the mutual matching of said flaps at least at a region to be welded, said laser torch having, at said presser, an emitter of said laser beam to project said laser beam onto said matching flaps to be welded.

Further characteristics and advantages of the invention will become better apparent from the following detailed description of a preferred but not exclusive embodiment of the laser welding device according to the invention, illustrated by way of nonlimiting example in the accompanying drawings, wherein:

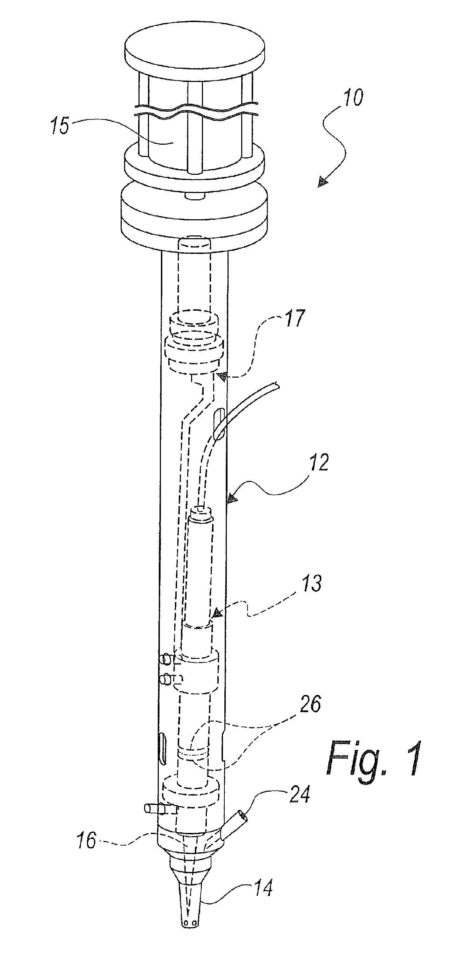

Figure 1 is a perspective view of a laser welding device according to the invention;

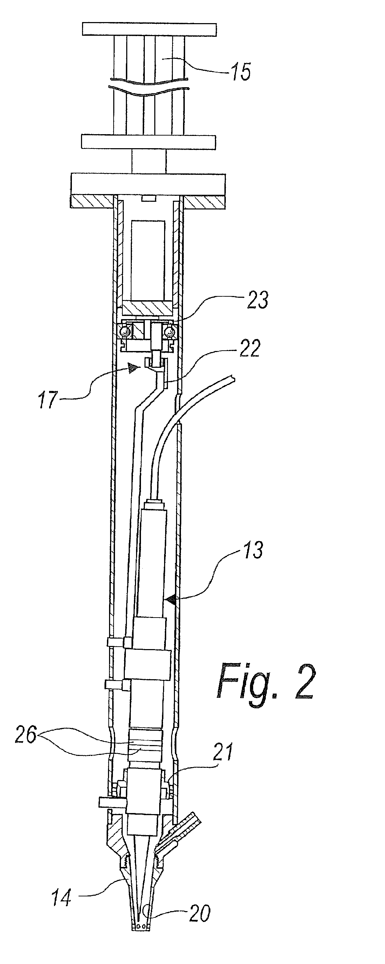

Figure 2 is a partially sectional front elevation view of the laser welding device according to the invention;

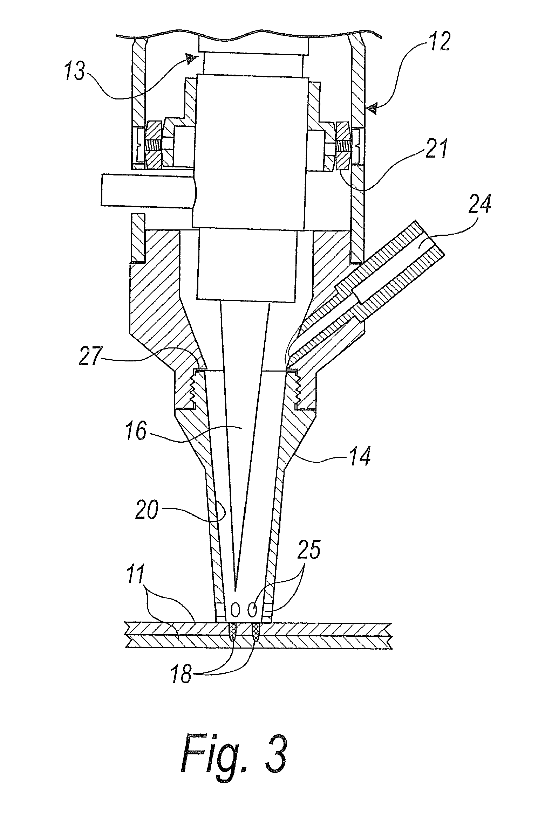

Figure 3 is an enlarged-scale sectional view of a detail of the laser welding device according to the invention.

It is noted that anything found to be already known during the patenting process is understood not to be claimed and to be the subject of a disclaimer.

With reference to the figures, the reference numeral 10 generally designates a laser welding device, particularly for welding flaps 11 of overlapping metal plates, which comprises a body 12 that carries a laser torch 13 for welding.

One particularity of the laser welding device 10, according to the invention, is that the body 12 comprises a presser 14, pressure means being provided, conveniently for example a pneumatic cylinder 15, for pressing the presser 14 on one of the flaps 11, for the mutual matching thereof at least at a region to be welded.

The laser torch 13 has, at the presser 14, an emitter 16 of the laser beam, for its laser projection onto the matching flaps 11 to be welded.

Preferably, the device 10 comprises means 17 for moving the laser torch 13 with respect to the body 12.

The laser torch 13 is conveniently supported in a movable manner by the body 12 and is connected to the movement means 17 adapted to move it, while the pneumatic cylinder 15 pushes the presser 14 against the matching flaps 11.

In this manner, the flaps 11 are kept in mutual contact, while the laser torch 13 forms in them a welding track 18 that corresponds to the movement of the emitter 16 with respect to the flaps 11.

Further, the device 10 comprises means for detecting the thrust pressure of the presser 14 on the flaps 11, of a per se known type.

Advantageously, the body 12 is box-like and elongated and accommodates internally the laser torch 13 and has the presser 14 at a first end thereof.

The presser 14 conveniently has a hole 20 for the passage of a laser beam emitted by the laser torch 13, which has the emitter 16 oriented so as to face the hole 20, at the presser 14, to emit a laser beam toward the outside of the body 12.

More particularly, the body 12 preferably has a universal-joint support 21 for the laser torch 13, which connects the body 12, proximate to the presser 14, to the laser torch 13, proximate to the emitter 16.

The movement means 17 advantageously comprise a rod 22 that has an end connected to the laser torch 13, while the other end is connected eccentrically to a motorized rotating element 23 for the substantially conical movement of the laser torch 13 inside the body 12, pivoted to the body 12 at the universal-joint support 21.

Preferably, the presser 14 is substantially frustum-shaped, with the hole 20 arranged longitudinally thereto, and is further connected at one end to the body 12, at the emitter 16, with the other end adapted to press against the flaps 11, arranging itself against them.

Conveniently, the laser welding device 10 comprises means for injecting gas in the presser 14, conveniently a nozzle 24, for controlling the welding atmosphere; at the end adapted to press against the flaps 11 the presser 14 has a plurality of vent holes 25 for such gas.

Further, the laser welding device 10 advantageously comprises means for adjusting the focusing of the laser beam emitted by the laser torch 13, conveniently rings 26 for adjusting the optical devices of the laser torch 13 and shims 27 that can be inserted at the connection of the presser 14 to the body 12 in order to space them.

The use of the laser welding device 10 according to the invention is as follows.

The flaps 11 to be welded are superimposed, and then the pneumatic cylinder 15 pushes the presser 14 against them, causing the accurate adjacent arrangement of the surfaces; in this manner, further, the torch is arranged, with respect to the plates, at the correct distance required as a function of the set focusing.

The means for detecting the pressure of the presser 14 on the flaps 11 allow to preset the controls of the pneumatic cylinder 15 to set their thrust for arranging the flaps 11 mutually adjacent, so as to not deform them in order to leave no marks of such pressure.

After activating the rotating element 23, such element, by means of the rod 22, imparts to the laser torch 13, which is pivoted to the body 12 by the universal-joint support 21, a conical movement.

Once the laser torch has been activated, the emitter 16 defines in the flaps 11 a substantially circular welding track 18, to the full benefit of the structural strength of the welded connection, given to it by the reduced local tension concentration, which for equal applied forces provides a circular welding profile with respect to profiles having different tracks.

Once welding of a region has ended, this operation can be repeated to form multiple welds for fixing the flaps 11.

In practice it has been found that the invention achieves the proposed aim and objects, providing a laser welding device, particularly for welding overlapping flaps of metal plates, that leaves no marks, at least on the face, of the welded plates that lies opposite the one that is penetrated by the weld, and has no welding defects, by working with a laser on flaps that are effectively mutually adjacent.

Further, a laser welding device according to the invention allows to perform welds whose structural strength is at least equal to that of currently known welds, and is structurally simple and easy to use and can be manufactured with relatively low costs.

A welding device according to the invention further provides for the focusing of the beam emitted by the torch with respect to the presser which, being pressed against the plates to be welded, acts as a spacer for spacing the torch from the plates, thus ensuring the correct focusing position of the torch with respect to the surface of the plates to be welded.

The invention thus conceived is susceptible of numerous modifications and variations, all of which are within the scope of the appended claims; all the details may further be replaced with other technically equivalent elements.

In practice, the materials used, as well as the contingent shapes and dimensions, may be any according to requirements and to the state of the art.

The disclosures in Italian Patent Application No. PD2007A000290 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A laser welding device (10), particularly for welding flaps (11) of overlapping metal plates, comprising a body (12) that supports a welding laser torch (13), **characterized in that** said body (12) comprises a presser (14), means for pressing said presser (14) against one flap of said flaps (11) being provided for the mutual matching of said flaps (11) at least at a region to be welded, said laser torch (13) having, at said presser (14), an emitter (16) of said laser beam to project said laser beam onto said matching flaps (11) to be welded.

2. The laser welding device according to claim 1, **characterized in that** it comprises means (17) for moving said laser torch (13) with respect to said body (12), said laser torch (13) being supported so that it can move by said body (12) and being movable by said movement means (17) simultaneously with the pressing of said presser (14) on said matching flaps (11) to form, in said flap (11), a welding track (18) that corresponds to the movement of said emitter (16) with respect to said flaps (11)

3. The laser welding device according to the preceding claims, **characterized in that** it comprises means for detecting the thrust pressure of said presser (14) on said flaps (11).

4. The laser welding device according to one or more of the preceding claims, **characterized in that** said body (12) is box-like and elongated and accommodates inside it said laser torch (13), said presser (14) being provided at a first end of said body (12) and having a passage hole (20) for a laser beam emitted by said laser torch (13), said laser torch (13) having said emitter (16) oriented so as to face said hole (20), at said presser (14), to emit a laser beam toward the outside of said body (12).

5. The laser welding device according to one or more of the preceding claims, **characterized in that** said body (12) has a universal-joint support (21) for said laser torch (13), which connects said body (12), proximate to said presser (14), to said laser torch (13) proximate to said emitter (16), said movement means (17) comprising a rod (22) in which one end is connected to said laser torch (13) and the other end is connected eccentrically to a motorized rotating element (23) for the substantially conical movement of said laser torch (13), within said body (12), pivoted to said body (12) at said universal-joint support (21).

6. The laser welding device according to one or more of the preceding claims, **characterized in that** it comprises means for injecting gas into said presser (14), for controlling the welding atmosphere, said presser (14) being substantially frustum-shaped, said hole (20) being arranged longitudinally thereto, with one end connected to said body (12), at said emitter (16), and having, at the other end, which can be pressed against said flaps (11) in order to arrange them mutually adjacent, a plurality of vent holes (25) for said gas.

7. The laser welding device according to one or more of the preceding claims, **characterized in that** it comprises means for adjusting the focusing of the laser beam emitted by said laser torch (13).
